(19)

**Europäisches Patentamt**
**European Patent Office**
**Office européen des brevets**

(11) **EP 4 726 808 A1**

(12) **EUROPEAN PATENT APPLICATION**
published in accordance with Art. 153(4) EPC

(43) Date of publication:
**15.04.2026 Bulletin 2026/16**

(21) Application number: **24903018.0**

(22) Date of filing: **25.12.2024**

(51) International Patent Classification (IPC):
*H01M 4/38* (2006.01)   *H01M 4/62* (2006.01)
*H01M 10/0525* (2010.01)

(52) Cooperative Patent Classification (CPC):
**H01M 4/38; H01M 4/62; H01M 10/0525;**
**Y02E 60/10**

(86) International application number:
**PCT/CN2024/142521**

(87) International publication number:
**WO 2025/124603 (19.06.2025 Gazette 2025/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   **27.12.2023   CN 202311830608**

(71) Applicants:
• **BTR New Material Group Co., Ltd.**
**Shenzhen, Guangdong 518106 (CN)**
• **Dingyuan New Energy Technology Co., Ltd.**
**Huizhou, Guangdong 516227 (CN)**

(72) Inventors:
• **SHI, Xiaotai**
**Shenzhen, Guangdong 518106 (CN)**
• **PANG, Chunlei**
**Shenzhen, Guangdong 518106 (CN)**
• **LIANG, Tengyu**
**Shenzhen, Guangdong 518106 (CN)**
• **WANG, Jingwei**
**Shenzhen, Guangdong 518106 (CN)**
• **REN, Jianguo**
**Shenzhen, Guangdong 518106 (CN)**
• **HE, Xueqin**
**Shenzhen, Guangdong 518106 (CN)**

(74) Representative: **Michalski Hüttermann & Partner**
**Patentanwälte mbB**
**Kaiststraße 16A**
**40221 Düsseldorf (DE)**

(54) **NEGATIVE ELECTRODE MATERIAL AND PREPARATION METHOD THEREFOR, AND LITHIUM-ION BATTERY**

(57)     The present application relates to the technical field of lithium batteries, and particularly relates to an anode material, a preparation method thereof and a lithium-ion battery. The anode material includes an active material including Si, O and metal M, where the metal M includes Mg, Ca and Cu. In the anode material, a mass content of Mg is $m_{Mg}$, a mass content of Ca is $m_{Ca}$, and a mass content of Cu is $m_{Cu}$, where $0<m_{Ca}/m_{Mg}<0.1$, and $0<m_{Cu}/m_{Mg} < 0.01$. In the anode material of the present application, Mg, Ca and Cu are introduced into the active material, and a ratio of Mg, Ca and Cu is limited within a proper range, so that the initial coulombic efficiency, the conductivity, the cycle performance and the lithium intercalation and deintercalation rate of the anode material are improved.

Mix a raw material of silicon-based active particles with a metal doping source containing M and perform heat treatment on the mixture, and mix and cool the formed steam to obtain an active material, where the anode material includes an active material including Si, O and metal M, the metal M includes Mg, Ca and Cu, and in the anode material, a mass content of Mg is $m_{Mg}$, a mass content of Ca is $m_{Ca}$, and a mass content of Cu is $m_{Cu}$, where $0<m_{Ca}/m_{Mg}<0.1$, and $0<m_{Cu}/m_{Mg}<0.01$   ⌇ S1

**Fig.1**

**Description**

The present application claims priority from Chinese patent application No. 2023118306082 filed on December 27, 2023, the entirety of which is incorporated herein by reference.

**TECHNICAL FIELD**

The present application relates to the technical field of lithium batteries, and particularly relates to an anode material, a preparation method thereof and a lithium-ion battery.

**BACKGROUND OF THE INVENTION**

Having the highest lithium storage capacity so far and a relatively low voltage platform, the silicon-based anode material is one of the hottest spots for research on anode materials of the lithium-ion battery. However, commercial applications of the silicon material are limited by its high volume expansion rate (>300%) and low conductivity. Theoretically, SiO has a capacity lower than Si, but the strength of a Si-O bond is twice that of a Si-Si bond. Moreover, the $Li_2O$ compound produced in the first-cycle reaction can alleviate the volume expansion. Therefore, SiO has much better cycle performance than Si. However, at the same time, excessive $Li_2O$ may increase the consumption of Li ions in the cathode material during the initial charging, thereby increasing the irreversible capacity of the material and reducing the initial coulombic efficiency.

In the existing art, a possible choice is to dope some reductive Mg into the silicon-based anode material, and distribute Si, O and Mg uniformly in the anode material, thereby increasing the irreversible capacity of the anode material. However, although the initial coulombic efficiency is improved to a certain extent, the silicon-based anode material prepared thereby still has the problems of low conductivity and poor cycle performance.

**SUMMARY OF THE INVENTION**

The present application provides an anode material, a preparation method thereof and a lithium-ion battery, which can help to improve the initial coulombic efficiency, conductivity and cycle performance of the anode material comprehensively, thereby solving the problem that the existing anode materials fail to achieve a balance among initial coulombic efficiency, conductivity and cycle performance.

In a first aspect, an embodiment of the present application provides an anode material, including an active material including Si, O and metal M, where the metal M includes Mg, Ca and Cu;

in the anode material, a mass content of Mg is $m_{Mg}$, a mass content of Ca is $m_{Ca}$, and a mass content of Cu is $m_{Cu}$, where $0<m_{Ca}/m_{Mg}<0.1$, and $0<m_{Cu}/m_{Mg}<0.01$.

In a second aspect, the present application further provides a preparation method for an anode material, including:

mixing a raw material of silicon-based active particles with a metal doping source containing M and performing heat treatment on the mixture, and mixing and cooling the formed steam to obtain an active material, where the anode material includes an active material including Si, O and metal M, where the metal M includes Mg, Ca and Cu, and in the anode material, a mass content of Mg is $m_{Mg}$, a mass content of Ca is $m_{Ca}$, and a mass content of Cu is $m_{Cu}$, where $0< m_{Ca}/m_{Mg} <0.1$, and $0<m_{Cu}/m_{Mg} <0.01$.

In a third aspect, the present application further provides a lithium-ion battery, including the anode material as described above, or an anode material prepared by the above preparation method.

Compared with the existing art, the technical solutions of the present application have at least the following technical effects:

In the anode material of the present application, Mg, Ca and Cu are introduced into the active material, and a ratio of Mg, Ca and Cu is limited within a proper range, so that the initial coulombic efficiency, conductivity and cycle performance of the anode material are improved comprehensively. In the present application, the introduced Mg and Ca help to reduce a content of silicon oxide in the anode material so that the amount of lithium consumed by the silicon oxide in the anode material is reduced, and the initial coulombic efficiency of the anode material is improved. Compared with Mg atoms, Ca atoms have lower electronegativity and may produce higher bond energy with O and/or Si atoms, which is more favorable for stabilizing an atomic cluster structure, so that the structural stability and cycle performance of the anode material are improved. When $m_{Ca}/m_{Mg} > 0.1$, the capacity and the initial coulombic efficiency of the anode material are both reduced. As a doping element, Cu may be present in the anode material in the form of at least one compound of copper oxide, cuprous oxide, cupric silicate, or copper silicide. Compared with Mg atoms, Cu atoms in the Cu compound have obviously more electron shells and a lower electron transition energy barrier, *i.e.,* a lower capture capability of electrons, which means that an outermost layer of free electrons has good mobility. When $m_{Cu}/m_{Mg} > 0.01$, the structural stability of the anode material will be reduced. Therefore, the doping of Cu can improve the conductivity and cycle performance of the silicon oxide anode material.

In the preparation method of the present application, proper amounts of Mg, Ca and Cu are doped into the silicon-based active particles in the process of preparing the active material of the anode material, so that the ratio of Ca, Cu and Mg in the finally prepared anode material is controlled within an ideal range, and the prepared anode material has relatively high initial coulombic efficiency and conductivity, excellent cycle performance, and high lithium intercalation and deintercalation rates. In the technical solutions of the present application, the introduced Mg and Ca will react with the silicon oxide in the silicon-based active particles to generate elemental silicon, which can help to reduce a content of silicon oxide in the anode material so that the amount of lithium consumed by the silicon oxide in the anode material is reduced, and the initial coulombic efficiency of the anode material is improved.

## BRIEF DESCRIPTION OF THE DRAWINGS

The accompanying drawings, which constitute a part of the present application, are illustrated here to provide a further understanding of the application, and exemplary examples of the present application and description thereof serve to explain the present application instead of limiting the application inappropriately. In the drawings:

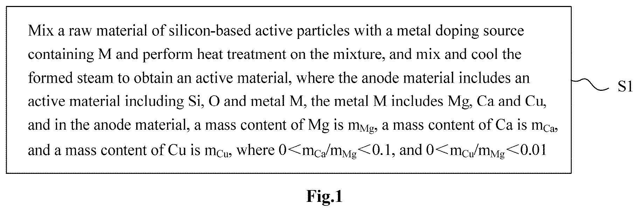

FIG. 1 is a diagram showing a preparation process of an anode material according to the present application.

## DETAIL DESCRIPTION OF THE INVENTION

It should be noted that the examples of the present application and features therein may be combined with each other as long as they are not contradictory. To better understand the technical solutions of the present application, the examples of the present application will be described in detail below with reference to the accompanying drawings.

It should be understood that the examples described are merely some, but not all, of the examples of the present application. All other examples obtained by a person of ordinary skill in the art based on the examples in the present application without any creative labor belong to the protection scope of the present application.

The terminology used in the examples of the present application is for the purpose of describing particular examples only, and is not intended to limit the present application. As used in the examples of the present application and the appended claims, the singular forms "a", "an", and "the" are intended to include the plural forms as well, unless the context clearly indicates otherwise.

It should be understood that the term "and/or" as used herein is merely to describe an association relationship of associated objects, which may include three relationships. For example, A and/or B may refer to: A alone, A and B, or B alone. In addition, the character "/" as used herein generally indicates that the former and latter associated objects are in an "or" relationship.

In the existing art, a possible choice is to dope some reductive Mg into the silicon-based anode material, and distribute Si, O and Mg uniformly in the anode material, thereby increasing the irreversible capacity of the anode material. However, although the initial coulombic efficiency is improved to a certain extent, the silicon-based anode material prepared thereby still has the problems of low conductivity and poor cycle performance.

In this regard, those skilled in the art have also tried to improve the conductivity and cycle performance of the anode material by adjusting the content distribution of various elements in the anode material, but the above technical problem remains unsolved, mainly because: various elements in the anode material are mutually associated and collaborated to influence the comprehensive performance of the material, and for the influences of multiple parameters, it is difficult to obtain a properly controlled range of each parameter in the product by a simple test means.

In view of the above technical problem, in a first aspect, the present application provides an anode material.

In an embodiment of the present application, the anode material includes an active material including Si, O, C and metal M, where the metal M includes Mg, Ca and Cu. In the anode material, a mass content of Mg is $m_{Mg}$, a mass content of Ca is $m_{Ca}$, and a mass content of Cu is $m_{Cu}$, where $0<m_{Ca}/m_{Mg}<0.1$, and $0<m_{Cu}/m_{Mg}<0.01$.

In the anode material of the present application, Mg, Ca and Cu are introduced into the active material, and a ratio of Mg, Ca and Cu is limited within a proper range, so that the initial coulombic efficiency, conductivity and cycle performance of the anode material are improved comprehensively. In the present application, the introduced Mg and Ca help to reduce a content of silicon oxide in the anode material so that the amount of lithium consumed by the silicon oxide in the anode material is reduced, and the initial coulombic efficiency of the anode material is improved.

It should be noted that from the analysis of the data and beneficial effects of the examples, the applicant may conclude that the technical problem of the present application can be solved by limiting the contents of Mg, Ca and Cu to the above ranges in the present application without limiting the specific forms of Mg, Ca and Cu.

In the anode material of the present application, M (M = Mg, Ca, or Cu) is dispersed in the silicon oxide material in the form of atoms. Due to a lower atomic electronegativity than O and Si, M can bond with O or Si to form M-Si-O, M-O, M-Si, or the like, *i.e.,* form at least one of a silicate of M, an oxide of M, or a silicide of M. For example: Ca atoms may form at least one of calcium silicate, calcium oxide, calcium silicide, or the like.

In the anode material of the present application, Mg is present in the form of magnesium silicate; and compared with Mg atoms, Ca atoms have lower electronegativity and may produce higher bond energy with O and/or Si atoms, which is more favorable for stabilizing an atomic cluster structure, so that the structural stability and cycle performance of the anode material are improved.

As a doping element, Cu may be present in the anode material in the form of at least one compound of copper oxide, cuprous oxide, cupric silicate, or copper silicide. Compared with Mg atoms, Cu atoms in the Cu compound have obviously more electron shells and a lower electron transition energy barrier, *i.e.,* a lower capture capability of electrons, which means that an outermost layer of free electrons has good mobility. Therefore, the doping of Cu can improve the conductivity and cycle performance of the silicon oxide anode material.

In the anode material of the present application, proper amounts of Mg, Ca and Cu are introduced into the active material, where Mg is present in the form of magnesium silicate, Ca and Cu are present in the form of metal compounds, and the metal oxide includes at least one of metal silicate, metal oxide or metal silicide, so that the initial coulombic efficiency, conductivity and cycle performance of the anode material are improved comprehensively.

In some embodiments, the introduced Mg and Ca of the proper mass content ratio are present in the anode material in the forms of magnesium silicate and calcium silicate, where the calcium silicate is more stable than the magnesium silicate. Compared with pure magnesium silicate, the coexistence of magnesium silicate and calcium silicate of proper proportions can further improve the structural stability of the anode material, so that an anode sheet of the battery made of the anode material can maintain higher conductivity even after long-term charge and discharge cycles. In other words, the cycle performance of the anode material is improved. In addition, the introduced proper content of Cu may be combined with Si and present in the form of copper silicide, while a proper amount of copper silicide enables good conductivity and ductility, so that the structural stability and electrical contact effect of the anode material can be enhanced, and the cycle performance and conductivity of the anode material can be further improved.

In the anode material of the present application, $m_{Ca}/m_{Mg}$ may be specifically 0.01, 0.02, 0.03, 0.04, 0.05, 0.06, 0.07, 0.08, 0.09, 0.099, or the like, or may be any other value within that range, which is not limited herein. By limiting the value of $m_{Ca}/m_{Mg}$ to the above range, a silicon crystallite size generated by the silicon oxide reaction can be controlled at or within 15 nm, thereby improving the cycle performance of the anode material.

In the anode material of the present application, $m_{Cu}/m_{Mg}$ may be specifically 0.001, 0.002, 0.003, 0.004, 0.005, 0.006, 0.007, 0.008, 0.009, 0.0099, or the like, or may be any other value within that range, which is not limited herein. Under these conditions, the content of the possibly generated copper silicide can be better controlled, thereby improving the capacity of the anode material.

For similar reasons, it is further preferable in some embodiments that in the anode material, $0.028 \leq m_{Ca}/m_{Mg} \leq 0.099$, and $0.0008 \leq m_{Cu}/m_{Mg} \leq 0.0099$.

In some embodiments, Si, O, Mg, Ca and Cu are uniformly distributed in the active material, which can help to improve the structural stability at different positions of the anode material, and further improve the overall cycle performance of the anode material.

In some embodiments, in the anode material, $0 < m_{Mg} < 25\%$, and $m_{Mg}$ may be specifically 0.01%, 1%, 5%, 10%, 15%, 20%, 24.99%, or the like, or may be any other value within that range, which is not limited herein. By further limiting the value of $m_{Mg}$ within the above range, the present application can help to improve the cycle performance and conductivity of the anode material without significantly affecting the capacity of the anode material.

For similar reasons, it is further preferable in some embodiments that in the anode material, $5\% \leq m_{Mg} \leq 15\%$, and preferably $7.8\% \leq m_{Mg} \leq 8.7\%$.

In some embodiments, in the anode material, $0 < m_{Ca} < 10\%$, and $m_{Ca}$ may be specifically 0.01%, 1%, 2%, 4%, 6%, 8%, 9.99%, or the like, or may be any other value within that range, which is not limited herein. By further limiting the value of $m_{Ca}$ within the above range, the present application can further help to slow down the reaction process between Ca and the silicon oxide in the material, so that the Si grain size can be further reduced, and the anode material has better cycle performance.

For similar reasons, it is further preferable in some embodiments that in the anode material, $0.2\% \leq m_{Ca} \leq 0.8\%$.

In some embodiments, in the anode material, $0 < m_{Cu} < 0.5\%$, and $m_{Cu}$ may be specifically 0.01%, 0.1%, 0.2%, 0.3%, 0.4%, 0.499%, or the like, or may be any other value within that range, which is not limited herein. By further limiting the value of $m_{Cu}$ within the above range, the present application can help to provide a more appropriate amount of copper silicide in the anode material, so that the cycle performance and conductivity of the anode material are improved through good conductivity and ductility, and the capacity reduction caused by the excessive copper silicide is further alleviated.

For similar reasons, it is further preferable in some embodiments that in the anode material, $0.007\% \leq m_{Cu} \leq 0.08\%$.

In some embodiments, a mass content of silicon in the anode material is 24% to 36%, which may be specifically 24%, 28%, 30%, 32%, 34%, 36%, or the like, or may be any other value within that range, which is not limited herein.

In some embodiments, a mass content of oxygen in the anode material is 44% to 59%, which may be specifically 44%, 48%, 50%, 53%, 55%, 57%, 59%, or the like, or may be any other value within that range, which is not limited herein.

By further limiting the mass contents of silicon and oxygen in the anode material within the above ranges, the present application can facilitate full reaction of Si and O with the introduced Mg, Ca and Cu to comprehensively improve the initial coulombic efficiency, conductivity and cycle performance of the anode material, while further reduce the lithium consumed by the silicon oxide in the anode material, so that the initial coulombic efficiency of the anode material is better improved.

In some embodiments, in the active material, Si is present in the form of elemental silicon and/or silicon oxide, and has a Si crystallite size ≤15 nm in the elemental silicon and/or the silicon oxide. The relatively small Si crystallite size can help to further improve the cycle performance of the anode material.

In some embodiments, in the active material, Si is present in the form of at least one of amorphous silicon, crystalline silicon, silicon oxide, a silicon alloy, or a composite of crystalline silicon and amorphous silicon.

In some embodiments, the active material includes a silicon oxide having a general formula $SiO_x$, where $0<x\leq2$, and x may be specifically 0.1, 0.5, 1, 1.5, 2, or the like, or may be any other value within that range, which is not limited herein.

In some embodiments, the metal M is present in the form of at least one of a silicate of M, an oxide of M, or a silicide of M.

In some embodiments, the active material includes at least one of calcium silicate, magnesium silicate, or copper silicide.

In some embodiments, the active material further includes elemental copper.

In the present application, the active material is generated from the introduced Mg, Ca and Cu, which can better improve the initial coulombic efficiency of the anode material, and improve the structural stability of the anode material so that the anode material maintains high conductivity after long-term charge-discharge cycles, thereby further improving the cycle performance of the anode material.

In some embodiments, the anode material further includes a carbon material on at least part of a surface of the active material. With the carbon layer on a part of the surface of the active material, formation of a solid electrolyte interphase (SEI) film caused by direct contact of the active material with the electrolyte can reduced, and degradation of the cycle performance of the material can be alleviated.

In some embodiments, the carbon material includes at least one of graphite, graphene, amorphous carbon, diamond-like carbon, carbon nanotubes, or carbon fibers. The carbon material can provide good conductivity while protecting the active material, thereby further improving the conductivity of the anode material. The amorphous carbon is a material which exhibits no characteristic peaks in an XRD pattern formed by pyrolysis of a carbon source. For example, the amorphous carbon may be obtained by decomposing acetylene at 750°C to 850°C.

In some embodiments, the carbon material forms a carbon layer on the surface of the active material.

In some embodiments, the carbon layer covers the active material so that the volume expansion rate of the anode material can be effectively reduced.

In some embodiments, the carbon layer has a thickness of 50 nm to 200 nm, which may be specifically 50 nm, 80 nm, 110 nm, 140 nm, 170 nm, 200 nm, or the like, or may be any other value within that range, which is not limited herein. With the thickness of the carbon layer limited within the above range, the carbon layer can completely cover the active material to prevent repeatedly generation of an unstable SEI film due to direct contact between the active material and the electrolyte, which may cause excessive consumption of the electrolyte and degradation of the cycle performance of the material, while the carbon layer is also prevented from being too thick and cracking due to the stress of internal particles.

In some embodiments, a mass content of C in the anode material is 1% to 20%, which may be specifically 1%, 4%, 8%, 12%, 16%, 20%, or the like, or may be any other value within that range, which is not limited herein. Under these conditions, a balance between the protective performance and the conductivity of the active material can be achieved, so that better conductivity and cycle performance are both obtained.

In some embodiments, the anode material has a pH of 8 to 10, which may be specifically 8.00, 8.50, 9.00, 9.50, 10, or the like, or may be any other value within that range, which is not limited herein. Under these conditions, the anode material can be adapted to most types of electrolyte, thereby improving the universality of the anode material.

In some embodiments, the anode material has an average particle size D50 of 1 μm to 100 μm, which may be specifically 1 μm, 10 μm, 20 μm, 40 μm, 60 μm, 80 μm, 100 μm, or the like, or may be any other value within that range, which is not limited herein. The proper particle size can facilitate preparation of the material while reducing agglomeration.

In some embodiments, the anode material has a specific surface area of 1 m²/g to 120 m²/g, which may be specifically 1 m²/g, 10 m²/g, 20 m²/g, 40 m²/g, 6 m²/g, 80 m²/g, 100 m²/g, or 120 m²/g, or the like, or may be any other value within that range, which is not limited herein. The proper specific surface area can help to further reduce formation of the SEI film during the initial charge-discharge cycle, thereby further improving the initial coulombic efficiency of the anode material.

As discussed above, in the anode material of the present application, Mg, Ca and Cu are introduced into the active material, and a ratio of Mg, Ca and Cu is limited within a proper range, so that the initial coulombic efficiency, conductivity and cycle performance of the anode material are improved comprehensively.

Specifically, in some embodiments, the initial coulombic efficiency of the anode material is 80% to 95%, preferably 80% to 85%.

In some embodiments, the anode material has a conductivity of 0.5 S/cm to 7 S/cm, preferably 2 S/cm to 7 S/cm.

In some embodiments, a capacity retention after 50 cycles of the anode material is 80% to 90%.

In some embodiments, an electrode sheet expansion rate after 50 cycles of the anode material is 30% to 38%.

An anode material with the above performance parameters is more suitable as a component of a lithium-ion battery to further improve the electrochemical performance of the whole battery.

In a second aspect, the present application further provides a preparation method for an anode material, which is shown in FIG. 1.

In an example of the present application, the preparation method includes:

S1, mixing a raw material of silicon-based active particles with a metal doping source containing M and performing heat treatment on the mixture, and mixing and cooling the formed steam to obtain an active material, where the anode material includes an active material including Si, O and metal M, the metal M includes Mg, Ca and Cu, and in the anode material, a mass content of Mg is $m_{Mg}$, a mass content of Ca is $m_{Ca}$, and a mass content of Cu is $m_{Cu}$, where $0 < m_{Ca}/m_{Mg} < 0.1$, and $0 < m_{Cu}/m_{Mg} < 0.01$.

In the preparation method of the present application, proper amounts of Mg, Ca and Cu are doped into the silicon-based active particles in the process of preparing the active material of the anode material, so that the ratio of Ca, Cu and Mg in the finally prepared anode material is controlled within an ideal range, and the prepared anode material has relatively high initial coulombic efficiency and conductivity, excellent cycle performance, and high lithium intercalation and deintercalation rates.

In the technical solutions of the present application, the introduced Mg and Ca will react with the silicon oxide in the silicon-based active particles to generate elemental silicon, which can help to reduce a content of silicon oxide in the anode material so that the amount of lithium consumed by the silicon oxide in the anode material is reduced, and the initial coulombic efficiency of the anode material is improved. Moreover, after reducing silicon in the silicon oxide, the introduced Mg and Ca can further react with the silicon oxide to generate corresponding magnesium silicate and calcium silicate, the calcium silicate is more stable than the magnesium silicate, and compared with pure magnesium silicate, the coexistence of magnesium silicate and calcium silicate of proper proportions can further improve the structural stability of the anode material, so that an anode sheet of the battery made of the anode material can maintain higher conductivity even after long-term charge and discharge cycles. In other words, the cycle performance of the anode material is improved. In addition, the introduced Cu will further react with the generated elemental silicon to generate a copper silicon compound, so that the amount of free elemental silicon in the anode material is reduced, the structural stability of the anode material and the electrical contact effect among anode material particles are enhanced, and the cycle performance and conductivity of the anode material are further improved.

In the preparation method of the present application, $m_{Ca}/m_{Mg}$ may be specifically 0.01, 0.02, 0.03, 0.04, 0.05, 0.06, 0.07, 0.08, 0.09, 0.099, or the like, or may be any other value within that range, which is not limited herein. By limiting the value of $m_{Ca}/m_{Mg}$ to the above range, a silicon crystallite size generated by the silicon oxide reaction can be controlled at or within 15 nm. When the value of $m_{Ca}/m_{Mg}$ is too large, Ca will react with the silicon oxide more violently, generate a large amount of heat in the reaction process, and produce large sizes of Si crystal grains, resulting in poor cycle performance of the prepared anode material.

In the preparation method of the present application, $m_{Cu}/m_{Mg}$ may be specifically 0.001, 0.002, 0.003, 0.004, 0.005, 0.006, 0.007, 0.008, 0.009, 0.0099, or the like, or may be any other value within that range, which is not limited herein. When the mass content ratio of Cu to Mg is too large, an excessive amount of copper silicide will be generated, which may further cause capacity reduction of the material.

In some embodiments, a mass ratio of a metal doping source of M to the silicon-based active particles is (1 to 35):100, specifically 1:100. 10:100, 20:100, 30:100, 35:100, or the like, or may be any other value within that range, which is not limited herein. With such a mass ratio range, Mg, Ca and Cu can be favorably introduced to generate proper amounts of magnesium silicate, calcium silicate and copper silicon compound so that the cycle performance and conductivity of the anode material are both further improved.

In some embodiments, the metal doping source includes at least one of elemental metal M or a compound containing metal M.

In some embodiments, the metal doping source includes a mixture of an oxide containing metal M and/or a salt containing metal M with a reducing substance.

In some embodiments, the salt containing metal includes at least one of $MgCO_3$, $MgCl_2$, $CaCO_3$, dolomite, or copper-dyed dolomite.

Such a metal doping source is lower in cost and easy to obtain, thereby facilitating further reduction in the preparation cost of the anode material, and making the anode material more suitable for industrial production and applications.

In some embodiments, the raw material of the silicon-based active particles includes at least one of a mixture of Si, $SiO_y$ and $SiO_2$, a mixture of $SiO_y$ and Si, or a mixture of Si and $SiO_2$, where $0<y<2$.

In some embodiments, a molar weight of M in the metal doping source is $n_M$, where $0< n_{Ca}/n_{Mg}<1.8$, and $0<n_{Cu}/n_{Mg}<0.3$. By limiting the molar content ratio of calcium, copper and magnesium in the metal doping source to the above range, the mass content ratio of calcium, copper and magnesium in the active material of the prepared anode material can be ensured to satisfy: $0<m_{Ca}/m_{Mg}<0.1$, and $0<m_{Cu}/m_{Mg}<0.01$.

In some embodiments, a molar weight of M in the metal doping source is $n_M$, a molar weight of Si in the raw material of the silicon-based active particles is $n_{Si}$, and $n_M:n_{Si} = (0.02 \text{ to } 0.62):1$, specifically 0.02:1, 0.1:1, 0.2:1, 0.4:1, 0.62:1 or any ratio therebetween. By limiting the molar ratio of M in the metal doping source to the silicon in the raw material of the silicon-based active particles to the above range, the initial coulombic efficiency, conductivity and cycle performance of the prepared anode material can be greatly and comprehensively improved.

In some embodiments, the heat treatment includes heating a mixture of the raw material of the silicon-based active particles and the metal doping source in a negative pressure environment and keeping the temperature.

In some embodiments, the negative pressure environment has a vacuum degree of 0.001Pa to 100Pa, specifically 0.001, 10, 40, 60, 80, 100, or any value therebetween.

In some embodiments, the heating temperature is 1100°C to 1600°C, specifically 1100°C , 1200°C, 1300°C, 1400°C, 1500°C, or any value therebetween.

In some embodiments, the temperature is kept for 4h to 30h, specifically 4h, 12h, 20h, 25h, 30h, or any value therebetween.

In some embodiments, the cooling temperature is 100°C or less, specifically 10°C, 20°C, 30°C, 40°C, 50°C, 60°C, 70°C, 80°C, 90°C, 98°C, or any value in between.

Under the above heat treatment conditions, proper amounts of Mg, Ca and Cu can be introduced into the silicon-based active particles more favorably, and distributed uniformly in the anode material under the action of heat, so that a better effect of improving the initial coulombic efficiency, conductivity and cycle performance of the anode material is obtained.

In some embodiments, the method further includes performing pulverization and/or classification on the cooled active material.

In some embodiments, the pulverization is implemented by any one or more of ball milling, jet milling, crushing, or spheronization.

In some embodiments, the classification is implemented to select a material having an average particle size D50 of 1 $\mu$m to 100 $\mu$m and a specific surface area of 1 $m^2$/g to 120 $m^2$/g.

In some embodiments, pulverization of the cooled active material is performed before classification.

Through the pulverization and the classification, an anode material of proper particle size and specific surface area can be obtained more conveniently, which can further facilitate preparation of the material, and reduce formation of the SEI film during the initial charge-discharge cycle, thereby improving the initial coulombic efficiency of the anode material.

In some embodiments, the method further includes: performing carbon coating on the cooled active material to obtain the anode material.

In some embodiments, pulverization, classification and coating on the cooled active material are sequentially performed.

In some embodiments, the carbon coating includes any one of gas-phase carbon coating, liquid-phase carbon coating, or solid-phase carbon coating.

In some embodiments, the coating material used in the carbon coating is a carbon material including at least one of graphite, graphene, amorphous carbon, diamond-like carbon, carbon nanotubes, or carbon fibers.

In some embodiments, the coating thickness of the carbon coating is 50 nm to 200 nm, specifically 50 nm, 100 nm, 150 nm, 200 nm, or any value therebetween.

In some embodiments, the carbon coating includes: placing the active material into a CVD furnace, introducing argon externally as a protective gas, introducing acetylene internally as a carbon source, heating at 800°C to decompose the acetylene, and coating amorphous carbon on a surface of the active material to obtain the anode material.

In some embodiments, a mass content ratio of the carbon material to the active material is (1-20):(80-99), which may be specifically 1:99, 1:80, 5:80, 10:80, 15:80, 20:80, or any ratio therebetween.

With the surface of the active material coated with the carbon material, formation of an SEI film caused by direct contact of the active material with the electrolyte can be reduced, and excessive consumption of the electrolyte and degradation of the cycle performance of the material can be alleviated. Further, such a material can provide good conductivity while protecting the active material, thereby further improving the conductivity of the anode material, and can provide a proper carbon layer to reduce cracking caused by the internal particle stress.

In a third aspect, the present application further provides a lithium-ion battery, including the anode material as described above, or including an anode material prepared by the above preparation method. The lithium-ion battery of the present application has the properties of high initial coulombic efficiency, high conductivity, excellent cycle performance and the like.

The examples of the present application are further illustrated below in the context of several examples. The examples of the present application are not limited to the following specific examples. The present application may be modified and implemented as appropriate within the scope of the main claims.

### Example 1

Preparation of anode material

(1) Preparation of active material: taking and mixing 5 kg of SiO, 0.48 kg of Mg, 0.2 kg of Ca and 0.01 kg of Cu for 30min, and then placing the mixture into a vacuum furnace; heating to 1350°C under vacuum with a vacuum degree of 1Pa and keeping the temperature for 20h to generate SiO steam, Mg steam, Ca steam and Cu steam, mixing the various types of steam uniformly, and condensing the mixture to below 100°C to obtain 4 kg of the active material. The active material includes silicon, silicon oxide, calcium silicate, magnesium silicate and copper silicide, and the Si crystallite size calculated according to an XRD test pattern and the Scherrer equation is 6 nm.

(2) Powdering: taking 3 kg of the active material obtained in (1) for crushing, ball milling, classification and the like, to control an average particle size D50 of the material to about 4 $\mu$m and a specific surface area to 30 $m^2$/g.

(3) Carbon coating: placing the active material obtained after the powdering in (2) into a CVD furnace, introducing argon externally as a protective gas, introducing acetylene internally as a carbon source, heating at 800°C to decompose the acetylene, and coating 5% carbon on a surface of the active material to obtain the anode material. The carbon material is amorphous carbon, and the anode material has a pH of 8.5.

Elemental quantitative analysis is performed on the anode material obtained in example 1 with an inductively coupled plasma optical emission spectrometer, and the detection results and $m_{Ca}/m_{Mg}$ and $m_{Cu}/m_{Mg}$ calculated from the detection results are shown in table 1.

Further, an electrochemical performance test is performed on the anode material obtained in example 1, and the test results are shown in tables 2 and 3.

### Example 2

Preparation of anode material

(1) Preparation of active material: taking and mixing 3 kg of silicon powder, 6 kg of $SiO_2$, 3 kg of calcined copper-dyed dolomite and 3 kg of Mg for 30min, and then placing the mixture into a vacuum furnace; heating to 1350°C under vacuum with a vacuum degree of 1Pa and keeping the temperature for 20h to generate SiO steam, Mg steam, Ca steam and Cu steam, mixing the various types of steam uniformly, and condensing the mixture to below 100°C to obtain 4 kg of the active material.

(2) Powdering: taking 3 kg of the active material obtained in (1) for crushing, ball milling, classification and the like, to control an average particle size D50 of the material to about 4 $\mu$m and a specific surface area to 33 $m^2$/g.

(3) Carbon coating: placing the active material obtained after the powdering in (2) into a CVD furnace, introducing argon externally as a protective gas, introducing acetylene internally as a carbon source, heating at 800°C to decompose the acetylene, and coating 5% carbon on a surface of the active material to obtain the anode material. The carbon material is amorphous carbon, and the anode material has a pH of 8.9.

Elemental quantitative analysis is performed on the anode material obtained in example 2 with an inductively coupled plasma optical emission spectrometer, and the detection results and $m_{Ca}/m_{Mg}$ and $m_{Cu}/m_{Mg}$ calculated from the detection results are shown in table 1.

Further, an electrochemical performance test is performed on the anode material obtained in example 2, and the test results are shown in tables 2 and 3.

### Example 3

Preparation of anode material

(1) Preparation of active material: taking and mixing 5 kg of SiO, 0.5 kg of Mg, 0.8 kg of Ca and 0.1 kg of Cu for 30min, and then placing the mixture into a vacuum furnace; heating to 1350°C under vacuum with a vacuum degree of 1Pa and keeping the temperature for 20h to generate SiO steam, Mg steam, Ca steam and Cu steam, mixing the various types of steam uniformly, and condensing the mixture to below 100°C to obtain 4 kg of the active material.
(2) Powdering: taking 3 kg of the active material obtained in (1) for crushing, ball milling, classification and the like, to control an average particle size D50 of the material to about 4 $\mu$m and a specific surface area to 28 m$^2$/g.
(3) Carbon coating: placing the active material obtained after the powdering in (2) into a CVD furnace, introducing argon externally as a protective gas, introducing acetylene internally as a carbon source, heating at 800°C to decompose the acetylene, and coating 5% carbon on a surface of the active material to obtain the anode material. The carbon material is amorphous carbon, and the anode material has a pH of 8.6.

Elemental quantitative analysis is performed on the anode material obtained in example 3 with an inductively coupled plasma optical emission spectrometer, and the detection results and $m_{Ca}/m_{Mg}$ and $m_{Cu}/m_{Mg}$ calculated from the detection results are shown in table 1.
Further, an electrochemical performance test is performed on the anode material obtained in example 3, and the test results are shown in tables 2 and 3.

**Example 4**

Preparation of anode material

(1) Preparation of active material: taking and mixing 5 kg of SiO, 0.5 kg of Mg, 0.7 kg of Ca and 0.01 kg of Cu for 30min, and then placing the mixture into a vacuum furnace; heating to 1350°C under vacuum with a vacuum degree of 1.5Pa and keeping the temperature for 20h to generate SiO steam, Mg steam, Ca steam and Cu steam, mixing the various types of steam uniformly, and condensing the mixture to below 100°C to obtain 4 kg of the active material.
(2) Powdering: taking 3 kg of the active material obtained in (1) for crushing, ball milling, classification and the like, to control an average particle size D50 of the material to about 4 $\mu$m and a specific surface area to 31 m$^2$/g.
(3) Carbon coating: placing the active material obtained after the powdering in (2) into a CVD furnace, introducing argon externally as a protective gas, introducing acetylene internally as a carbon source, heating at 800°C to decompose the acetylene, and coating 5% carbon on a surface of the active material to obtain the anode material. The carbon material is amorphous carbon, and the anode material has a pH of 8.6.

Elemental quantitative analysis is performed on the anode material obtained in example 4 with an inductively coupled plasma optical emission spectrometer, and the detection results and $m_{Ca}/m_{Mg}$ and $m_{Cu}/m_{Mg}$ calculated from the detection results are shown in table 1.
Further, an electrochemical performance test is performed on the anode material obtained in example 4, and the test results are shown in tables 2 and 3.

**Example 5**

Preparation of anode material

(1) Preparation of active material: taking and mixing 5 kg of SiO, 0.5 kg of Mg, 1.5 kg of Ca and 0.06 kg of Cu for 30min, and then placing the mixture into a vacuum furnace; heating to 1350°C under vacuum with a vacuum degree of 1Pa and keeping the temperature for 20h to generate SiO steam, Mg steam, Ca steam and Cu steam, mixing the various types of steam uniformly, and condensing the mixture to below 100°C to obtain 4 kg of the active material.
(2) Powdering: taking 3 kg of the active material obtained in (1) for crushing, ball milling, classification and the like, to control an average particle size D50 of the material to about 4 $\mu$m and a specific surface area to 26 m$^2$/g.
(3) Carbon coating: placing the active material obtained after the powdering in (2) into a CVD furnace, introducing argon externally as a protective gas, introducing acetylene internally as a carbon source, heating at 800°C to decompose the acetylene, and coating 5% carbon on a surface of the active material to obtain the anode material. The carbon material is amorphous carbon, and the anode material has a pH of 8.8.

Elemental quantitative analysis is performed on the anode material obtained in example 5 with an inductively coupled plasma optical emission spectrometer, and the detection results and $m_{Ca}/m_{Mg}$ and $m_{Cu}/m_{Mg}$ calculated from the detection results are shown in table 1.

Further, an electrochemical performance test is performed on the anode material obtained in example 5, and the test results are shown in tables 2 and 3.

**Example 6**

Preparation of anode material

(1) Preparation of active material: taking and mixing 5 kg of SiO, 0.48 kg of Mg, 0.8 kg of Ca and 0.4 kg of Cu for 30min, and then placing the mixture into a vacuum furnace; heating to 1350°C under vacuum with a vacuum degree of 1Pa and keeping the temperature for 20h to generate SiO steam, Mg steam, Ca steam and Cu steam, mixing the various types of steam uniformly, and condensing the mixture to below 100°C to obtain 4 kg of the active material.

(2) Powdering: taking 3 kg of the active material obtained in (1) for crushing, ball milling, classification and the like, to control an average particle size D50 of the material to about 4 $\mu$m and a specific surface area to 37 $m^2$/g.

(3) Carbon coating: placing the active material obtained after the powdering in (2) into a CVD furnace, introducing argon externally as a protective gas, introducing acetylene internally as a carbon source, heating at 800°C to decompose the acetylene, and coating 5% carbon on a surface of the active material to obtain the anode material. The carbon material is amorphous carbon, and the anode material has a pH of 9.

Elemental quantitative analysis is performed on the anode material obtained in example 6 with an inductively coupled plasma optical emission spectrometer, and the detection results and $m_{Ca}/m_{Mg}$ and $m_{Cu}/m_{Mg}$ calculated from the detection results are shown in table 1.

Further, an electrochemical performance test is performed on the anode material obtained in example 6, and the test results are shown in tables 2 and 3.

**Example 7**

Preparation of anode material

(1) Preparation of active material: taking and mixing 5 kg of SiO, 0.48 kg of Mg, 0.2 kg of Ca and 0.01 kg of Cu for 30min, and then placing the mixture into a vacuum furnace; heating to 1100°C under vacuum with a vacuum degree of 0.001Pa and keeping the temperature for 30h to generate SiO steam, Mg steam, Ca steam and Cu steam, mixing the various types of steam uniformly, and condensing the mixture to below 100°C to obtain 4 kg of the active material.

(2) Powdering: taking 3 kg of the active material obtained in (1) for crushing, ball milling, classification and the like, to control an average particle size D50 of the material to about 1 $\mu$m and a specific surface area to 120 $m^2$/g.

(3) Carbon coating: placing the active material obtained after the powdering in (2) into a CVD furnace, introducing argon externally as a protective gas, introducing acetylene internally as a carbon source, heating at 750°C to decompose the acetylene, and coating 1% carbon on a surface of the active material to obtain the anode material. The carbon material includes amorphous carbon, the carbon layer has a thickness of 50 nm, and the anode material has a pH of 8.

Elemental quantitative analysis is performed on the anode material obtained in example 7 with an inductively coupled plasma optical emission spectrometer, and the detection results and $m_{Ca}/m_{Mg}$ and $m_{Cu}/m_{Mg}$ calculated from the detection results are shown in table 1.

Further, an electrochemical performance test is performed on the anode material obtained in example 7, and the test results are shown in tables 2 and 3.

**Example 8**

Preparation of anode material

(1) Preparation of active material: taking and mixing 5 kg of SiO, 0.48 kg of Mg, 0.2 kg of Ca and 0.01 kg of Cu for 30min, and then placing the mixture into a vacuum furnace; heating to 1600°C under vacuum with a vacuum degree of 100Pa and keeping the temperature for 4h to generate SiO steam, Mg steam, Ca steam and Cu steam, mixing the various types of steam uniformly, and condensing the mixture to below 100°C to obtain 4 kg of the active material.

(2) Powdering: taking 3 kg of the active material obtained in (1) for crushing, ball milling, classification and the like, to control an average particle size D50 of the material to about 100 $\mu$m and a specific surface area to 1 $m^2$/g.

(3) Carbon coating: placing the active material obtained after the powdering in (2) into a CVD furnace, introducing argon externally as a protective gas, introducing acetylene internally as a carbon source, heating at 850°C to decompose the acetylene, and coating 20% carbon on a surface of the active material to obtain the anode material. The carbon material includes amorphous carbon, the carbon layer has a thickness of 200 nm, and the anode material has a pH of 10.

Elemental quantitative analysis is performed on the anode material obtained in example 8 with an inductively coupled plasma optical emission spectrometer, and the detection results and $m_{Ca}/m_{Mg}$ and $m_{Cu}/m_{Mg}$ calculated from the detection results are shown in table 1.

Further, an electrochemical performance test is performed on the anode material obtained in example 8, and the test results are shown in tables 2 and 3.

**Comparative example 1**

This comparative example differs from example 1 in that: the raw material added in step (1) includes 5 kg of SiO and 0.5 kg of Mg.

**Comparative example 2**

This comparative example differs from example 1 in that: the raw material added in step (1) includes 5 kg of SiO, 0.5 kg of Mg and 0.2 kg of Ca.

**Comparative example 3**

This comparative example differs from example 1 in that: the raw material added in step (1) includes 5 kg of SiO, 0.5 kg of Mg, 0.2 kg of Ca and 0.2 kg of Cu.

**Comparative example 4**

This comparative example differs from example 1 in that: the raw material added in step (1) includes 5 kg of SiO, 0.5 kg of Mg, 0.8 kg of Ca and 0.01 kg of Cu.

**Comparative example 5**

This comparative example differs from example 1 in that: the raw material added in step (1) includes 5 kg of SiO, 0.5 kg of Mg and 0.6 kg of Cu.

The test method includes the following steps:

1. Element contents: performing elemental quantitative analysis on the anode material with an inductively coupled plasma optical emission spectrometer and an oxygen/nitrogen/hydrogen analyzer.

2. Si crystallite size: scanning and testing the anode material within a range of 10 to 90 degrees by an X-ray diffractometer, and calculating the Si crystallite size according to the Scherrer equation.

3. Thickness of carbon material: grinding and cutting the anode material using an ion mill, and then observing a section of the anode material by a scanning electron microscope to confirm a thickness of the carbon material.

4. pH: testing the anode material with a Mettler Toledo pH meter to obtain a pH of the material.

5. Average particle size D50: performing particle size analysis on the anode material by a Malvern Panalytical mastersizer3000 laser diffraction particle size analyzer to obtain the average particle size D50, which represents volume cumulative distribution.

6. Specific surface area: performing specific surface area analysis on the anode material by a Micromeritics Tristar 3020 with nitrogen as an absorption/desorption gas to obtain the specific surface area.

7. Powder conductivity: testing a volume resistivity of the anode material powder by a four-probe method. Resistances of the powder under five pressure points, i.e., 4KN, 8KN, 12KN, 16KN and 20KN, are respectively tested by an instrument, and then the conductivity and resistivity of the anode material powder are automatically calculated by a computer. Table 3 shows the conductivity under the pressure of 20 KN.

8. Test of electrical properties:

A coin cell is assembled according to BTRTC/ZY/01-020 "Coin Cell Method Operating Instruction Manual", which specifically includes: dissolving an anode material, conductive carbon black and a polyacrylic acid binder into deionized water according to a mass ratio of 75:15:10, and uniformly dispersing the mixture by a high-speed disperser with the following stirring parameters: firstly stirring the mixture for 20s at a rotating speed of 800 r/min, and then for 5min at a rotating speed of 2000 r/min. The test further includes: then wiping a surface of a copper foil with dust-free cloth stained with absolute ethyl alcohol to remove oil stains, coating a slurry uniformly on the copper foil by an automatic coating machine with a 200 μm coater at a speed of 20 mm/s, drying the copper foil in a blast drying oven at 95°C for 0.5h, transferring the copper foil to a vacuum drying oven at 130°C for 8h, manufacturing the copper foil into electrode sheets each with φ = 16 mm by a sheet punching machine, and weighing, subpackaging, and transferring the electrode sheets into a glove box filled with argon for cell assembly. The electrode is a metal lithium sheet, and the separator is a PP-PE-PP composite membrane with a diameter of 19.2 mm. A component ratio of the electrolyte is EC/EMC/DMC = 1/1/1, and a concentration of the lithium salt ($LiPF_6$) is 1.05 mol/L.

(1) Lithium intercalation capacity: under room temperature conditions, charging at a constant current of 0.1C and limiting a charging voltage to 0.005V to 1.5V, to obtain a capacity as the lithium intercalation capacity.

(2) Lithium deintercalation capacity: under room temperature conditions, discharging at a constant current of 0.1C and limiting a discharge voltage to 1.5V to 0.005V, to obtain a capacity serving as the lithium deintercalation capacity.

(3) Initial coulombic efficiency: multiplying a ratio of the lithium intercalation capacity after an initial charging to the lithium deintercalation capacity after an initial discharge by 100%.

(4) Cycle performance: manufacturing the anode materials prepared in the examples and the comparative examples into batteries which are tested by a coin cell charging and discharging device, in cycle 1, discharging at 0.1C to 0.01V, discharging in an arithmetically decreasing manner at 0.01C to 0.01V, discharging at 0.01C to 0.005V, and charging at 0.1C to 1.5V; in cycle 2, discharging at 0.2C to 0.01V, discharging in an arithmetically decreasing manner at 0.02C to 0.01V, discharging at 0.02C to 0.005V, and charging at 0.2C to 1.5V; in cycle 3, discharging at 0.5C to 0.01V, discharging in an arithmetically decreasing manner at 0.05C to 0.01V, discharging at 0.05C to 0.005V, and charging at 0.5C to 1.5V; in cycles 4 to 50, discharging at 1C to 0.01V, discharging in an arithmetically decreasing manner at 0.1C to 0.01V, discharging at 0.1C to 0.005V, and charging at 1C to 1.5V; and in cycle 51, discharging at 0.1C to 0.01V, discharging in an arithmetically decreasing manner at 0.01C to 0.01V, and discharging at 0.01C to 0.005V.

(5) Expansion rate of electrode sheet: under room temperature conditions, testing and recording a thickness of the manufactured electrode sheet by a screw micrometer, and then performing charge-discharge cycles on a battery assembled with the electrode sheet; disassembling the battery after a certain number of cycles, and testing the thickness of the electrode sheet by the screw micrometer; and taking a ratio of a thickness increment of the electrode sheet after the cycles to the thickness of the electrode sheet before the cycles as an expansion rate of the electrode sheet.

Testing results:

The testing results of element contents in the anode materials prepared in examples 1 to 8 and comparative examples 1 to 5 are shown in table 1 below, where in each anode material, in addition to Ca, Mg and Cu, the anode material further includes Si, O and C, a mass content of silicon is 24% to 36%, a mass content of oxygen is 44% to 59%, and the remainder is C.

Table 1

| Sample | Elemental mass content (%) | | | $m_{Ca}/m_{Mg}$ | $m_{Cu}/m_{Mg}$ |
| --- | --- | --- | --- | --- | --- |
| | Ca | Mg | Cu | | |
| Example 1 | 0.38 | 8.21 | 0.03 | 0.046 | 0.0037 |
| Example 2 | 0.22 | 7.83 | 0.02 | 0.028 | 0.0026 |
| Example 3 | 0.73 | 8.71 | 0.08 | 0.084 | 0.0092 |

(continued)

| Sample | Elemental mass content (%) | | | $m_{Ca}/m_{Mg}$ | $m_{Cu}/m_{Mg}$ |
|---|---|---|---|---|---|
| | Ca | Mg | Cu | | |
| Example 4 | 0.27 | 8.53 | 0.007 | 0.032 | 0.0008 |
| Example 5 | 0.83 | 8.36 | 0.04 | 0.099 | 0.0048 |
| Example 6 | 0.31 | 8.08 | 0.08 | 0.038 | 0.0099 |
| Example 7 | Same as example 1 | | | | |
| Example 8 | Same as example 1 | | | | |
| Comparative example 1 | / | 8.64 | / | / | / |
| Comparative example 2 | 0.31 | 8.32 | / | 0.038 | / |
| Comparative example 3 | 0.21 | 8.49 | 0.11 | 0.025 | 0.0129 |
| Comparative example 4 | 0.88 | 8.37 | 0.02 | 0.105 | 0.0024 |
| Comparative example 5 | / | 8.38 | 0.16 | / | 0.019 |

The testing results of electrical properties of the anode materials prepared in examples 1 to 8 and comparative examples 1 to 5 are shown in table 2 below:

Table 2

| Sample | Lithium intercalation capacity (mAh/g) | Lithium deintercalation capacity (mAh/g) | Initial coulombic efficiency (%) |
|---|---|---|---|
| Example 1 | 1677 | 1410 | 84.1 |
| Example 2 | 1708 | 1416 | 82.9 |
| Example 3 | 1637 | 1383 | 84.5 |
| Example 4 | 1687 | 1422 | 84.3 |
| Example 5 | 1680 | 1413 | 84.1 |
| Example 6 | 1652 | 1389 | 83.6 |
| Example 7 | 1634 | 1381 | 82.7 |
| Example 8 | 1632 | 1379 | 82.8 |
| Comparative example 1 | 1716 | 1428 | 83.2 |
| Comparative example 2 | 1688 | 1423 | 84.3 |
| Comparative example 3 | 1689 | 1388 | 82.2 |
| Comparative example 4 | 1651 | 1402 | 84.9 |
| Comparative example 5 | 1603 | 1322 | 83.1 |

The testing results of conductivity and cycle expansion performance of the anode materials prepared in examples 1 to 8 and comparative examples 1 to 5 are shown in table 3 below:

Table 3

| Sample | Conductivity (S/cm) | Capacity retention after 30 cycles (%) | Capacity retention after 50 cycles (%) | Electrode sheet expansion rate after 50 cycles (%) |
|---|---|---|---|---|
| Example 1 | 3.2 | 91.1 | 87.6 | 33.1 |
| Example 2 | 3.0 | 91.0 | 87.7 | 33.4 |
| Example 3 | 5.4 | 89.3 | 86.5 | 33.5 |

(continued)

| Sample | Conductivity (S/cm) | Capacity retention after 30 cycles (%) | Capacity retention after 50 cycles (%) | Electrode sheet expansion rate after 50 cycles (%) |
|---|---|---|---|---|
| Example 4 | 2.9 | 88.6 | 86.1 | 34.3 |
| Example 5 | 4.3 | 91.4 | 88.5 | 33.2 |
| Example 6 | 6.1 | 92.3 | 89.0 | 34.9 |
| Example 7 | 2.8 | 88.4 | 85.9 | 35.2 |
| Example 8 | 2.9 | 88.5 | 85.7 | 35.1 |
| Comparative example 1 | 0.9 | 84.7 | 81.6 | 39.3 |
| Comparative example 2 | 1.0 | 87.0 | 82.9 | 38.7 |
| Comparative example 3 | 10.3 | 88.2 | 82.2 | 38.0 |
| Comparative example 4 | 2.2 | 88.5 | 85.4 | 37.2 |
| Comparative example 5 | 10.9 | 88.9 | 82.0 | 38.4 |

After analysis in conjunction with tables 1, 2 and 3, it is concluded that:

Comparing comparative examples 1, 2 and 5 with example 1, it can be seen that instead of an anode material having only one or two of Ca, Mg and Cu in the active material, the active material of the anode material according to the present application contains all the three elements Ca, Mg and Cu at the same time, which can help to reduce the volume expansion rate of the material and increase a ratio of lithium intercalation capacity to lithium deintercalation capacity, while comprehensively improving the initial coulombic efficiency, conductivity and cycle performance of the material. Compared with example 1, although comparative example 5 has a higher conductivity, the cycle expansion rate is also significantly increased, thereby greatly limiting applications of the anode material. A specific cause is rooted in that: in comparative example 5, $m_{Cu}/m_{Mg}$ is notably increased, causing a notably increased content of copper silicide in the anode material, and thus an increased conductivity of the anode material. Meanwhile, $m_{Ca}/m_{Mg}$ is reduced, causing unbalanced proportions of magnesium silicate and calcium silicate in the anode material, so that the structural stability of the anode material is reduced, and the cycle performance of the anode material is also obviously reduced. In examples 7 and 8, the preparation process of the coating layer is adjusted, and since the content of M is still adjusted within the range limited in the present application, the performance of the anode material is not significantly reduced, and the technical problem proposed in the present application can still be solved.

Comparing comparative examples 3 to 4 with examples 1 to 4, it can be seen that when the mass content ratios of Ca to Mg and Cu to Mg in the prepared anode material satisfy: $0<m_{Ca}/m_{Mg}<0.1$, and $0<m_{Cu}/m_{Mg}<0.01$, the volume expansion rate and the ratio of lithium deintercalation capacity to lithium intercalation capacity of the anode material can be improved, so that the initial coulombic efficiency, conductivity and cycle performance of the material can be comprehensively improved without reducing one or more of the properties due to unbalanced distribution of the elements. Compared with examples 1 to 4, although comparative example 3 has a higher conductivity, the cycle expansion rate is also significantly increased, thereby greatly limiting applications of the anode material. A cause is rooted in that: in comparative example 3, $m_{Cu}/m_{Mg}$ is notably increased, causing an increased content of copper silicide in the anode material, and thus an increased conductivity of the anode material, while the missing of Ca causes significantly reduced structural stability and notably increased cycle expansion rate of the anode material.

The above are merely preferred embodiments of the present application and not intended to limit the present application. Any amendments, equivalent substitutions, improvements, and the like within the spirit and principle of the present application are included in the scope of protection defined by the appended claims of the present application.

**Claims**

1. An anode material, **characterized in that** the anode material comprises an active material including Si, O and metal M, wherein the metal M includes Mg, Ca and Cu; and
in the anode material, a mass content of Mg is $m_{Mg}$, a mass content of Ca is $m_{Ca}$, and a mass content of Cu is $m_{Cu}$, where $0<m_{Ca}/m_{Mg}<0.1$, and $0<m_{Cu}/m_{Mg}<0.01$.

2. The anode material of claim 1, **characterized in that** the anode material has at least one of the following features:

(1) in the active material, Mg, Ca and Cu are uniformly distributed;

(2)

$$0 < m_{Mg} < 25\%;$$

(3)

$$0 < m_{Ca} < 10\%;$$

(4)

$$0 < m_{Cu} < 0.5\%.$$

3. The anode material of claim 1, **characterized in that** the anode material has at least one of the following features:

(1) a mass content of silicon in the anode material is 24% to 36%;
(2) a mass content of oxygen in the anode material is 44% to 59%.

4. The anode material of claim 1, **characterized in that** the anode material has at least one of the following features:

(1) in the active material, Si is present in the form of elemental silicon and/or silicon oxide, and has a Si crystallite size ≤15 nm in the elemental silicon and/or the silicon oxide;
(2) in the active material, Si is present in the form of at least one of amorphous silicon, crystalline silicon, silicon oxide, a silicon alloy, or a composite of crystalline silicon and amorphous silicon.

5. The anode material of claim 1, **characterized in that** the active material includes a silicon oxide having a general formula $SiO_x$, where $0 < x \leq 2$.

6. The anode material of claim 1, **characterized in that** the metal M is present in the form of at least one of a silicate of M, an oxide of M, or a silicide of M.

7. The anode material of claim 6, **characterized in that** the active material includes at least one of calcium silicate, magnesium silicate, or copper silicide.

8. The anode material of claim 2, **characterized in that** the anode material has at least one of the following features:

(1)

$$0.028 \leq m_{Ca}/m_{Mg} \leq 0.099, \text{ and } 0.0008 \leq m_{Cu}/m_{Mg} \leq 0.0099;$$

(2)

$$5\% \leq m_{Mg} \leq 15\%;$$

(3)

$$0.2\% \leq m_{Ca} \leq 0.8\%;$$

(4)

$$0.007\% \leq m_{Cu} \leq 0.08\%.$$

9. The anode material of claim 1 or 2, **characterized in that** the anode material further comprises a carbon material on at least part of a surface of the active material.

**10.** The anode material of claim 9, **characterized in that** the anode material has at least one of the following features:

(1) the carbon material includes at least one of graphite, graphene, amorphous carbon, diamond-like carbon, carbon nanotubes, or carbon fibers;
(2) the carbon material forms a carbon layer on the surface of the active material;
(3) the carbon material forms a carbon layer with a thickness of 50 nm to 200 nm on the surface of the active material;
(4) a mass content of C in the anode material is 1% to 20%.

**11.** The anode material of claim 1, **characterized in that** the anode material has at least one of the following features:

(1) the anode material has a pH of 8 to 10;
(2) the anode material has an average particle size D50 of 1 $\mu$m to 100 $\mu$m;
(3) the anode material has a specific surface area of 1 $m^2$/g to 120 $m^2$/g;
(4) the anode material has a conductivity of 0.5 S/cm to 7 S/cm.

**12.** A preparation method for an anode material, **characterized in that** the method comprises:
mixing a raw material of silicon-based active particles with a metal doping source containing M and performing heat treatment on the mixture, and mixing and cooling the formed steam to obtain an active material, wherein the anode material includes the active material, the active material includes Si, O and metal M, the metal M includes Mg, Ca and Cu, and in the anode material, a mass content of Mg is $m_{Mg}$, a mass content of Ca is $m_{Ca}$, and a mass content of Cu is $m_{Cu}$, where $0 < m_{Ca}/m_{Mg} < 0.1$, and $0 < m_{Cu}/m_{Mg} < 0.01$.

**13.** The preparation method of claim 12, **characterized in that** the preparation method comprises at least one of the following features:

(1) a mass ratio of the metal doping source to the raw material of the silicon-based active particles is (1 to 35):100;
(2) the metal doping source includes at least one of elemental metal M or a compound containing metal M;
(3) the raw material of the silicon-based active particles includes at least one of a mixture of Si, $SiO_y$ and $SiO_2$, a mixture of $SiO_y$ and Si, or a mixture of Si and $SiO_2$, where $0 < y < 2$;
(4) a molar weight of M in the metal doping source is $n_M$, a molar weight of Si in the raw material of the silicon-based active particles is $n_{Si}$, and $n_M : n_{Si}$ = (0.02 to 0.62):1;
(5) a molar weight of M in the metal doping source is $n_M$, where $0 < n_{Ca}/n_{Mg} < 1.8$, and $0 < n_{Cu}/n_{Mg} < 0.3$.

**14.** The preparation method of any one of claims 12 to 13, **characterized in that** the method further comprises:
performing carbon coating on the cooled active material to obtain the anode material.

**15.** A lithium-ion battery, **characterized in** comprising the anode material of any one of claims 1 to 11, or an anode material produced by the preparation method of any one of claims 12 to 14.

Mix a raw material of silicon-based active particles with a metal doping source containing M and perform heat treatment on the mixture, and mix and cool the formed steam to obtain an active material, where the anode material includes an active material including Si, O and metal M, the metal M includes Mg, Ca and Cu, and in the anode material, a mass content of Mg is $m_{Mg}$, a mass content of Ca is $m_{Ca}$, and a mass content of Cu is $m_{Cu}$, where $0 < m_{Ca}/m_{Mg} < 0.1$, and $0 < m_{Cu}/m_{Mg} < 0.01$

~ S1

**Fig.1**

# INTERNATIONAL SEARCH REPORT

International application No.

**PCT/CN2024/142521**

| A. | CLASSIFICATION OF SUBJECT MATTER |
|---|---|

H01M4/38(2006.01)i; H01M4/62(2006.01)i; H01M10/0525(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS, CNTXT, WPABS, DWPI, ENTXT, ENTXTC, Elsevier Science Direct, ISI Web of Science, 读秀, DUXIU, 超星科技数字图书馆, Chaoxing Digital Library, 中国期刊网全文数据库, CJFD: 贝特瑞, 石晓太, 庞春雷, 负极, 硅, 氧, 镁, 钙, 铜, 比, BTR, negative, electrode, silicon, si, oxygen, mg, ca, cu, copper, magnesium, calcium, "/", ratio, "%".

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117747802 A (BTR NEW MATERIALS GROUP CO., LTD.) 22 March 2024 (2024-03-22) claims 1-10 | 1-15 |
| A | CN 116779792 A (CHANGZHOU GUIYUAN NEW ENERGY MATERIAL CO., LTD.) 19 September 2023 (2023-09-19) description, paragraphs 0005-0007 and 0010 | 1-15 |
| A | CN 107636868 A (SHIN-ETSU CHEMICAL CO., LTD.) 26 January 2018 (2018-01-26) entire document | 1-15 |
| A | CN 110556529 A (TIANMU ENERGY ANODE MATERIAL CO., LTD.) 10 December 2019 (2019-12-10) entire document | 1-15 |
| A | CN 109599551 A (AMPRIUS (NANJING) CO., LTD.) 09 April 2019 (2019-04-09) entire document | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 March 2025** | **31 March 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/142521** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2023275213 A1 (BTR NEW MATERIAL GROUP CO., LTD. et al.) 31 August 2023 (2023-08-31)<br>      entire document | 1-15 |

Form PCT/ISA/210 (second sheet) (July 2022)

## INTERNATIONAL SEARCH REPORT
### Information on patent family members

International application No.

**PCT/CN2024/142521**

| Patent document cited in search report | | | Publication date (day/month/year) | Patent family member(s) | | | Publication date (day/month/year) |
|---|---|---|---|---|---|---|---|
| CN | 117747802 | A | 22 March 2024 | CN | 117747802 | B | 03 December 2024 |
| CN | 116779792 | A | 19 September 2023 | | None | | |
| CN | 107636868 | A | 26 January 2018 | JP | 2016225199 | A | 28 December 2016 |
| | | | | JP | 6548959 | B2 | 24 July 2019 |
| | | | | KR | 20180014710 | A | 09 February 2018 |
| | | | | KR | 102671190 | B1 | 03 June 2024 |
| | | | | WO | 2016194288 | A1 | 08 December 2016 |
| | | | | TW | 201715773 | A | 01 May 2017 |
| | | | | TWI | 709270 | B | 01 November 2020 |
| | | | | EP | 3306711 | A1 | 11 April 2018 |
| | | | | EP | 3306711 | B1 | 25 November 2020 |
| | | | | US | 2018151873 | A1 | 31 May 2018 |
| | | | | US | 10535872 | B2 | 14 January 2020 |
| CN | 110556529 | A | 10 December 2019 | WO | 2021072803 | A1 | 22 April 2021 |
| | | | | CN | 110556529 | B | 14 March 2023 |
| CN | 109599551 | A | 09 April 2019 | CN | 109599551 | B | 24 August 2021 |
| US | 2023275213 | A1 | 31 August 2023 | JP | 2023535257 | A | 17 August 2023 |
| | | | | KR | 20230009434 | A | 17 January 2023 |
| | | | | EP | 4170752 | A1 | 26 April 2023 |
| | | | | WO | 2023273726 | A1 | 05 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023118306082